# EUROPEAN PATENT SPECIFICATION

(11) **EP 2 888 206 B1**
(45) Date of publication and mention of the grant of the patent: **22.05.2019**
(21) Application number: 13833295.2
(22) Date of filing: 22.08.2013
(51) Int. Cl.: C02F 1/52, C02F 1/58, C02F 103/10, C02F 1/66, C02F 101/10, C02F 1/72, C02F 11/12

(54) **METHOD FOR REMOVING SULPHATE, CALCIUM AND OTHER SOLUBLE METALS FROM SULPHATE-CONTAINING WASTE WATER**
VERFAHREN ZUR ENTFERNUNG VON SULFAT, CALCIUM UND ANDEREN LÖSLICHEN METALLEN AUS SULFATHALTIGEN ABWÄSSERN
PROCÉDÉ D'ÉLIMINATION DE SULFATE, DE CALCIUM ET D'AUTRES MÉTAUX SOLUBLES À PARTIR D'EAUX USÉES CONTENANT DU SULFATE

(30) Priority: 27.08.2012 FI 20125884
(43) Date of publication of application: 01.07.2015
(73) Proprietor: Outotec (Finland) Oy, 02230 Espoo (FI)
(72) Inventor: NEVATALO, Laura, 02320 Espoo (FI); VAN DER MEER, Tuomas, 02230 Espoo (FI); KERSTIENS, Bernd, 61191 Rosbach (DE)
(74) Representative: Kolster Oy Ab
(86) International application number: PCT/FI2013/050816
(87) International publication number: WO 2014/033361

(56) References cited:
- EP-B1- 0 250 626
- WO-A1-02/16272
- WO-A1-2011/163451
- US-A1- 2012 031 850
- US-B1- 6 280 630
- CHRYSOCHOOU M ET AL: "Evaluation of ettringite and hydrocalumite formation for heavy metal immobilization: Literature review and experimental study", JOURNAL OF HAZARDOUS MATERIALS, ELSEVIER, AMSTERDAM, NL, vol. 136, no. 1, 10 August 2006 (2006-08-10), pages 20-33, XP027884640, ISSN: 0304-3894 [retrieved on 2006-08-10]

## Description

### FIELD OF THE INVENTION

The present invention relates to a method for removing sulphate, calcium and other soluble metals from sulphate-containing waste water.

### BACKGROUND OF THE INVENTION

Publication WO 98/55405 discloses a process for removing sulphates and calcium from a water stream which comprises the steps of combining the water stream and an amount of amorphous aluminium trihydroxide (Al(OH)₃); allowing the formation of ettringite as a precipitate and removing the precipitated ettringite from the water stream. The water stream may also be combined with both an amount of aluminium hydroxide and an amount of lime (CaO). The process may include a desupersaturating step, which may involve passing the water stream through a high solids precipitator to cause precipitation of calcium sulphate on gypsum seen in the form of calcium sulphate dihydrate (gypsum). The process may also include a post treatment step of adding carbon dioxide to the water stream to precipitate dissolved lime as calcium carbonate and to reduce the pH of the water stream.

Publication from International Network for acid prevention (INAP), Treatment of Sulphate in Mine Effluents, October 2003, Lorax Environmetal, discloses also the method (SAVMIN) for removing sulphate from ARD (Acid Rock Drainage) water. In the first stage lime is added to the feed of water and dissolved metals and magnesium are precipitated as hydroxides. After removal of metals and magnesium the water is seeded with gypsum crystals to catalyse the precipitation of gypsum from the supersaturated solution. In the third stage aluminium hydroxide is added to the water, which is still supersaturated with respect to gypsum, for precipitating ettringite. The ettringite slurry is removed from the feed water by filtration and thickening and in the fourth stage the waste water stream is treated with CO₂ to lower the pH. Relatively pure CaCO₃ is precipitated and removed. The ettringite slurry is decomposed with sulphuric acid to regenerate aluminium hydroxide for reuse in the third stage of the treatment process.

Publication DE 37 09 950 discloses a method for separating sulphate ions from waste waters through precipitating poorly soluble calcium aluminate sulphates with aluminate ions in the presence of calcium ions. The source for aluminate ions is sodium aluminate or material containing sodium aluminate. In addition to sodium aluminate or the material containing sodium aluminate also lime is added. Thereby can Ca(OH)₂ and CaO be used.

Publication EP 0 584 502 discloses a method for precipitating sulphate dissolved in water as calcium aluminium sulphates by using lime hydrate suspension and a sodium hydroxyaluminate solution as a precipitating medium. The publication discloses also the use of this method for preparing calcium aluminium sulphate, which can be further processed into aluminiumoxidecontaining gypsum anhydride.

Publication EP 0 250 626 discloses a method for separating sulphate ions from industrial water by precipitating by adding aluminiumoxide and/or calciumaluminate to waste water and mixing and adjusting pH to be between 11.2 to 11.8 by Ca(OH)₂. The formed calcium aluminate sulphate is separated.

Further relevant prior art are US 6 280 630 and WO 02/16272.

### BRIEF DESCRIPTION OF THE INVENTION

The invention relates to a method and a computer program, which are characterized by what is stated in the independent claims. The preferred embodiments of the invention are disclosed in the dependent claims.

The invention relates to a method for removing sulphate, calcium and/or other soluble metals from waste water. The selection of the steps of the method for the removal of sulphate, calcium and other soluble metals may be done based on the initial sulphate concentration of the water fed to the method, the concentration of Na, K and Ca cations in the water and on the amount of gypsum which is precipitateable and its relation to the desired stoichiometric amount of ettringite precipitated. The amount of sulphate which is possible to precipitate as gypsum depends on the concentration of Na, K and Ca in the waste water. The method of the invention comprises the following steps
a) a gypsum precipitation step, wherein the waste water is contacted with a first calcium compound or a first material comprising calcium compound for producing a first sludge containing gypsum
b) an ettringite precipitation step, wherein the first sludge is contacted with a second calcium compound or a second material comprising a second calcium compound and an aluminium compound or a material containing an aluminium compound, for producing a second sludge containing ettringite and gypsum,
   wherein a gypsum removal step is performed between steps a) and b) if the amount of gypsum solids precipitated in the gypsum precipitation step a) is more than 10 weight-% of the designed stoichiometric amount of ettringite solids precipitated in the ettringite precipitation step b), or
   wherein no gypsum removal step is performed if the amount of gypsum solids precipitated in the gypsum precipitation step a) is less than or equal to 10 weight-% of the designed stoichiometric amount of ettringite solids precipitated in the ettringite precipitation step b),
c) a first separation step, wherein a solid-liquid separation is performed for the second sludge containing ettringite and gypsum for separating solids from the liquid thereby producing a first solution,
d) a neutralisation step, wherein the first solution is contacted with a carbonating agent for neutralising the first solution and precipitating calcium contained in the first solution as calcium carbonate, and
e) a second separation step wherein a solid-liquid separation is performed for separating precipitated calcium carbonate from the first solution in order to obtain water having a reduced sulphate, calcium and/or other soluble metals content.

The method may comprise a gypsum removal step between the gypsum precipitation step and the ettringite precipitation step. In the gypsum removal step a solid-liquid separation is performed for removing precipitated gypsum from the first sludge. The presence of the optional gypsum removal step (or the presence of the gypsum removal unit if apparatus is in question) is selected on the basis of the amount of gypsum solids formed in the gypsum precipitation step. If the amount of gypsum solids formed in the gypsum precipitation step is higher than 10 weight-% of the designed stoichiometric amount of ettringite solids formation in the subsequent ettringite precipitation step, then an additional gypsum removal step may be performed. In typical applications there is no or only very minor amounts of gypsum present in the first sludge after the gypsum removal step.

An aspect of the invention is a method of controlling an ettringite precipitation process for removing sulphate, calcium and/or other soluble metals from waste water, comprising
feeding a sludge stream into a reactor tank for ettringite precipitation;
feeding stoichiometric, or slightly excess, amounts of aluminium compound or material comprising an aluminium compound, and stoichiometric amounts of a calcium compound or a material comprising calcium compound into the reactor tank;
measuring the pH of the solution in the reactor tank during the ettringite precipitation process;
feeding one or more additive doses of the calcium compound or the material comprising calcium compound into the reactor tank if the measured pH is not at a predetermined pH level, in order to adjust the pH of the solution towards the predetermined pH level.

According to embodiments of the invention, the predetermined pH level is in a range from about 10.5 to about 12.5, and a pH of the calcium compound or the material comprising calcium compound preferably range from about 10.5 to about 12.5.

A still further aspect of the invention is a computer program comprising a program code for performing the control method, when the program is run on one or more computer or processor.

An advantage of the present invention is that clean water is provided from which sulphate, calcium and other soluble metals have been removed. Surprisingly it has been found out that with the method and apparatus of the present invention it is possible to provide a precipitate by which both gypsum and ettringite may be piled in the same place and thus provide a very stable material which can be landfilled. It has been found out that ettringite and gypsum-ettringite precipitates are very stable and their buffer capacity is large, and thus the risk of dissolving of the precipitate is very low. This is especially advantageous with respect to landfilling. The precipitates formed in the present method may also be used as adsorbents for removing metals, such as As and Se.

It is well known in the industry that there are various problems and disadvantages related to the removal of sulphate from waste water and the landfilling or further processing of the gypsum formed during the removal of sulphates from the water. According to an embodiment of the invention gypsum precipitate is separated from the sludge before ettringite is precipitated. When the method comprises a gypsum removal step, in such case after the gypsum removal step the first sludge contains no or only minor quantities of gypsum, typically <100 mg/l. In such a case the relative amount of the formed ettringite precipitate is small and therefore the amount of precipitate which requires a special landfill area is small.

In an embodiment of the present invention the sludge containing gypsum is conveyed straight from the gypsum precipitation step to the ettringite precipitation step without performing any solid-liquid separation, i.e. gypsum removal step before it. This has the effect that the increased amount of solid nucleus improves the particle growth of formed ettringite precipitates and thereby allows more efficient solid liquid separation, i.e. the precipitate settles more easily, lower final moisture content in the solid residue, more stable solid residue and subsequently a decrease of the size of the related equipment. A further advantage of this embodiment of the invention is that gypsum and ettringite may be separated from the effluent with the same equipment and can be landfilled in the same place.

It has surprisingly been found out that the use of expensive aluminium compounds can be minimized and solid-liquid separation properties increased by selecting the processing routes according to the method of the present invention. These effects are achieved by controlling the amount of gypsum introduced to the ettringite precipitation step, which amount affects increasingly the consumption of the aluminium chemical. On the other hand the introduction of gypsum solids improves the stability and solid-liquid separation properties of the produced precipitates while also minimizing the size of the required equipment.

### BRIEF DESCRIPTION OF THE DRAWINGS

In the following the invention will be described in greater detail by means of preferred embodiments with reference to the attached drawings, in which
Figure 1 is a flow diagram of an example embodiment of the method without a gypsum removal step;
Figure 2 is a flow diagram of an example embodiment of the method with a gypsum removal step;
Figure 3 shows results of sulphate removal in ettringite precipitation using different aluminium chemicals when the start sulphate concentration was from 1700 to 2000 ppm;
Figure 4 shows sulphate precipitation kinetics of ettringite when using several aluminium chemicals;
Figure 5 shows dependence of required aluminium chemical dosing related to the gypsum/ettringite solids ratio (wt-%) in the ettringite precipitation step when gypsum solids are not separated;
Figure 6 is a block diagram of an ettringite precipitation system, according to an exemplary embodiment; and
Figure 7 is a flow diagram of a control of ettringite precipitation process according to an exemplary embodiment.

### DETAILED DESCRIPTION OF THE INVENTION

The invention relates to a method for removing sulphate, calcium and/or other soluble metals from waste water, which method comprises the following steps
a) a gypsum precipitation step, wherein the waste water is contacted with a first calcium compound or a first material comprising calcium compound for producing a first sludge containing gypsum,
b) an ettringite precipitation step, wherein the first sludge is contacted with a second calcium compound or a second material comprising a second calcium compound and an aluminium compound or a material containing an aluminium compound, for producing a second sludge containing ettringite and gypsum,
c) a first separation step, wherein a solid-liquid separation is performed for the second sludge containing ettringite and gypsum for separating solids from the liquid thereby producing a first solution,
d) a neutralisation step, wherein the first solution is contacted with a carbonating agent for neutralising the first solution and precipitating calcium contained in the first solution as calcium carbonate, and
e) a second separation step wherein a solid-liquid separation is performed for separating precipitated calcium carbonate from the first solution in order to obtain water having a reduced sulphate, calcium and/or other soluble metals content.

According to an embodiment of the invention the method does not contain a gypsum removal step between the gypsum precipitation step a) and the ettringite precipitation step b). Typically the optional gypsum removal step is not performed in cases with "low" sulphate load, i.e. if the amount of gypsum solids precipitated in the gypsum precipitation step (a) is less than or equal to 10 weight-% of the designed stoichiometric amount of ettringite solids precipitated in the ettringite precipitation step (b). The designed stoichiometric amount of ettringite precipitated is defined by the amount of ettringite precipitated stoichiometrically for a given flow when taking into account the sulphate level after gypsum precipitation and the desired sulphate level after ettringite precipitation, at the end of the process.

According to an embodiment of the invention the method comprises a gypsum removal step between the gypsum precipitation step a) and the ettringite precipitation step b). Typically the optional gypsum removal step may be performed in cases with "high" sulphate load, i.e. if the amount of gypsum solids precipitated in the gypsum precipitation step (a) is more than 10 weight-% of the designed stoichiometric amount of ettringite solids precipitated in the ettringite precipitation step (b).

The optional gypsum removal step is typically performed as a solid-liquid separation wherein the gypsum formed in step a) is separated from the first sludge, typically by a clarifier. The first sludge, from which the gypsum has been removed, is then conveyed to the ettringite precipitation step b). Whether the use of the additional solid-liquid-separation step is beneficial depends on the initial sulphate concentration of the waste water to be fed to the method and the concentration of Na, K and Ca ions in the water. The waste water may have a high concentration of sulphate, but the sulphate is not necessarily in the form or in the surrounding conditions in which it is possible to precipitate as gypsum. The Na, K and Ca ion concentrations have an effect on the amount of sulphate that is possible to be precipitated as gypsum. Thus, the selection of beneficial steps depends on the amount of gypsum and its relation to the desired amount of ettringite. When the method comprises a gypsum removal step, in such case after the gypsum removal step the first sludge contains no or only minor quantities of gypsum, typically <100 mg/l.

According to an embodiment of the invention the method consists of the steps a) to e).

According to an embodiment of the invention the method for removing sulphate, calcium and/or other soluble metals from waste water comprises the following steps
a) a gypsum precipitation step, wherein the waste water is contacted with a first calcium compound or a first material comprising calcium compound for producing a first sludge containing gypsum, followed by
   a') a gypsum removal step, wherein a solid-liquid separation is performed for removing precipitated gypsum from the first sludge,
b) an ettringite precipitation step, wherein the first sludge, from which the gypsum has been removed, is contacted with a second calcium compound or a second material comprising a second calcium compound and an aluminium compound or a material containing an aluminium compound, for producing a second sludge containing ettringite,
c) a first separation step, wherein a solid-liquid separation is performed for the second sludge containing ettringite for separating solids from the liquid thereby producing a first solution,
d) a neutralisation step, wherein the first solution is contacted with a carbonating agent for neutralising the first solution and precipitating calcium contained in the first solution as calcium carbonate, and
e) a second separation step wherein a solid-liquid separation is performed for separating precipitated calcium carbonate from the first solution in order to obtain water having a reduced sulphate, calcium and/or other soluble metals content.

The waste water may be any sulphate-containing water from which it is desired to remove sulphate, calcium and other soluble metals. Typically the waste water is process water or effluent, more typically the waste water is sulphate-containing water, such as mine water, recycle water from concentrator or discharge water from concentrator.

The method of the present invention is especially suitable for treating the waste waters from concentrators, where sulphate is a problem in recycle or discharge streams. The specific problem in concentrators plant waters is the simultaneous high sulphate and calcium load, making the configuration of the present invention feasible. Concentrators may also use sulphidic chemicals in flotation process and may in addition produce thiosalts, such as thiosulphate, polythionates and other sulphur compounds, during milling and flotation stages. The added and formed thiosalts may also require treatment. According to an embodiment of the invention in case the waste water comprises thiosalts, the waste water may be oxidised prior to feeding to the gypsum precipitation step. The oxidising is typically performed by biological or catalysed chemical oxidation.

According to an embodiment of the invention the first calcium compound and the second calcium compound are selected independently from the group consisting of calcium hydroxide, calcium oxide, calcium carbonate and any mixtures thereof. The first material containing calcium and the second material containing calcium are also selected independently from materials comprising calcium hydroxide, calcium oxide or calcium carbonate or a mixture thereof.

Typically the first calcium compound in the gypsum precipitation step is calcium hydroxide, which allows the removal of soluble sulphates depending on the pH-dependent solubilities of the counter-cations, especially K, Na and Ca, of the soluble sulphate species. Sulphate and metal impurities from the solution will typically precipitate according to the following equation:

SO₄²⁻+Ca(OH)₂+Me⁺/ Me²⁺/Me³⁺->MeOH/Me(OH)₂ / Me(OH)₃+CaSO₄ (1)

Typical metal impurities are divalent or trivalent metals. Typically in the gypsum precipitation step most of the metal sulphates, including magnesium sulphate, are precipitated at pH from 10 to 12, more typically from 11 to 12. The solubility of gypsum in the specific process conditions, such as in the presence of potassium and sodium, then defines the final sulphate concentration. Sulphate concentration in gypsum saturated solution is typically about 1200 to 1600 mg/l. However, the presence of large amounts of sodium and potassium sulphate can cause the final sulphate level to be higher as these are highly soluble even at very high pH.

According to an embodiment of the invention the ettringite precipitation step may be performed in the sludge containing gypsum, i.e. without the optional gypsum removal step. Ettringite has a tendency to dissolve at a pH below 10. According to an embodiment of the invention the gypsum content in the sludge may stabilize the solids and prevent the leaching of ettringite during landfilling, for which reason it is sometimes feasible to carry out the ettringite precipitation in gypsum-containing sludge. An advantage of this is that a precipitate which settles more easily is achieved and additionally forms a more compact and low moisture precipitate during filtration. The precipitation of gypsum and ettringite in a single stage is feasible, if less than or equal to 10 weight-% of gypsum is precipitated in step a) compared to the designed stoichiometric amount of ettringite solids precipitated in step b), because gypsum partly resolubilizes during ettringite precipitation thereby increasing the aluminium reagent consumption for achieving the target sulphate level. According to an embodiment of the invention the first calcium compound is calcium hydroxide, the second calcium compound is calcium hydroxide and the aluminium compound is sodium aluminate.

According to an embodiment of the invention the material containing aluminium compound is selected from the group consisting of calcium aluminate compounds, sodium aluminate solutions, sodium aluminate solids, calcium aluminate cements, aluminium chlorides, activated aluminate-containing minerals, such as kaolin or a mixture thereof. According to an embodiment of the invention the activation of aluminate-containing minerals has typically been carried out by mechanical activation, such as grinding to a fineness that liberates the aluminates from the mineral matrix so that aluminium can be solubilized, or by thermal activation or by chemical activation, such as by using acids or alkalis.

According to an embodiment of the invention the aluminium compound is selected from the group consisting of sodium aluminate, calcium aluminate, aluminium chloride, calcium aluminate cement, aluminium hydroxide and kaolin (Al₂Si₂O₅(OH)₄) or a mixture thereof. Typically, the aluminium compound is sodium aluminate. Sodium aluminate may be commercially available sodium aluminate or it may be prepared on-site from any suitable starting materials.

In the ettringite precipitation step the residual sulphate contained in the first sludge is precipitated with an aluminium compound, as presented above, to a desired level. The lowest achievable levels are 10 mg/l of sulphate. The achievable sulphate level depends from the aluminium compound used and also from the solution chemistry. It will also be possible to precipitate other sulphates, such as potassium and sodium sulphates, from the sludge in the ettringite precipitation step. Sulphate is precipitated as ettringite by adding an aluminium compound or material comprising an aluminium compound and the second calcium compound or second material comprising calcium compound, typically at pH from 10.5 to 12.5. The precipitation pH is primarily adjusted and controlled on the basis of the calcium balance in the solution ensuring that the calcium compound feed is sufficient compared to the stoichiometric need according to the ettringite precipitation reaction (2 moles of calcium per 1 mole of sulphate). Typically the calcium concentration in the ettringite sludge should be at least 200 mg/l. Secondarily, at the same time it must be ensured that the calcium compound feed is sufficient to allow the pH to be adjusted to the range from 10.5 to 12.5. Typically the second calcium compound in the ettringite precipitation step is lime milk (calcium hydroxide). After the gypsum precipitation step wherein the sulphate has been precipitated the sludge typically has a high pH and may also have a relatively high calcium concentration. Calcium concentration in the ettringite precipitation step is an important control parameter, as ettringite precipitation consumes 6 calcium ions per ettringite molecule. Lack of calcium ions during the ettringite precipitation step inhibits the removal of sulphate. Because of this the careful control of calcium compound addition to this stage is important.

Ettringite is precipitated according to the following equation:

2 Al³⁺+6 Ca²⁺+3 SO₄²⁻+34 H₂O -> Ca₆Al₂(SO₄)₃(OH)₁₂*26H₂O + 4 H⁺ (2)

According to an embodiment of the invention the retention time in the ettringite precipitation step is typically from 10 to 60 minutes, more typically from 15 to 30 minutes. The retention time in the neutralisation step is typically from 5 to 15 minutes.

According to an embodiment of the invention in the ettringite precipitation step the molar ratio of Al³+/SO₄²⁻ is typically approximately from 2:3 to 1:1.

According to an embodiment of the invention the solid-liquid separation is performed by settling, filtering and/or clarification. The clarifier may be for example a conventional round clarifier with an optimized feed well design or a lamella type of clarifier. The filter is typically selected from the range of filter presses (vertical or horizontal filter presses), but also belt filters may come into question.

The composition of the solids depends on the composition of the feed water. Typically the solids separated in the optional gypsum removal step are composed mainly of gypsum and metal hydroxides. According to an embodiment of the invention the solids separated in the first separation step comprise ettringite, optionally gypsum and optionally calcium carbonate, metal hydroxides and other inert components present in the feed materials to the method. The presence of gypsum in the solids separated in the first separation step depends on whether the additional gypsum removal step has been present. The solids formed in the gypsum precipitation step comprise typically metals as hydroxides, such as heavy metals as hydroxides and gypsum. For example copper and other soluble metals present in the feed precipitate typically as corresponding hydroxides already at the gypsum precipitation step. The solids separated in the first separation step may be landfilled. The gypsum and ettringite solids are advantageously piled in a single stacking area as gypsum functions as a stabilising compound for ettringite.

According to an embodiment of the invention a part of or all of the solids separated in the first separation step are recycled back to the gypsum precipitation step and/or the ettringite precipitation step. The recycling of the underflow, i.e. the solids from the first separation step is so called seed recycling. By doing this the particle size of the precipitate is made larger and this provides a sludge which is easier to settle, in other words sludge from which it is easier to separate the solids.

According to an embodiment of the invention in the neutralisation step the first solution is contacted with a carbonating agent for neutralising the first solution and precipitating calcium contained in the first solution as calcium carbonate. Typically the carbonating agent is any suitable carbonating agent, such as CO₂, sodium carbonate or sodium bicarbonate. More typically the carbonating agent is CO₂. If sodium carbonate is used, also acid can be fed to the neutralisation step. The neutralisation step is typically performed by decreasing the pH and precipitating calcium as calcium carbonate (CaCO₃) by adding CO₂ to the first solution. If the calcium concentration (Ca-hardness) needs to be lowered further a sodium hydroxide (NaOH), or other alkaline, stream may be added to the process step thereby allowing further removal of Ca as CaCO₃ by adding alkalinity and avoiding the pH to decrease to the unfavourable area for CaCO₃ precipitation, below pH 8 to 9. According to an embodiment of the invention in the neutralisation step the first solution is contacted with an alkaline, such as sodium hydroxide, for increasing the precipitation of calcium as calcium carbonate. The carbon dioxide is used for both neutralising the solution and for removing the calcium hardness from the solution. The neutralisation and calcium precipitation reactions for CO₂ neutralisation may be summarized by the following equations:

CO₂ + H₂O -> CO₃²⁻ + 2 H⁺ (3)

CO₃²⁻ + Ca²⁺ -> CaCO₃ (4)

H⁺ + OH⁻ -> H₂O (5)

The gypsum and ettringite are separated before the neutralisation step, as the lowering of the pH increases the solubility of the precipitated ettringite. It is possible to recycle the calcium carbonate solids to the beginning of the process to be used as neutralising agent to acidic waste waters to be processed. Calcium carbonate may also be used for producing alkaline buffering capacity for the gypsum and ettringite residues.

The second separation step may be performed by solid-liquid separation, for example as stated above.

The calcium content of the waste water is reduced to a desired level. Examples of calcium content in the waste water can be below 10 mg/l.

The method of the present invention has been found out to perform well also in low temperatures, even in 2°C. Thus, the method of the present invention is also suitable for processing cold waters.

Furthermore, described herein is also an apparatus for removing sulphate, calcium and/or other soluble metals from waste water, which apparatus comprises:
a) a gypsum precipitation unit, which is adapted for producing a first sludge containing gypsum by contacting the waste water with a first calcium compound or a first material comprising calcium compound,
b) an ettringite precipitation unit, which is adapted for producing a second sludge containing ettringite and gypsum by contacting the first sludge with a second calcium compound or a second material comprising a second calcium compound and an aluminium compound or a material containing an aluminium compound,
c) a first separation unit, which is adapted for producing a first solution by performing a solid-liquid separation for the second sludge containing ettringite and gypsum by separating solids from the liquid,
d) a neutralisation unit, which is adapted for neutralising the first solution by contacting the first solution with a carbonating agent and thereby precipitating calcium contained in the first solution as calcium carbonate, and
e) a second separation unit, which is adapted for performing a solid-liquid separation by separating precipitated calcium carbonate from the first solution and thereby obtaining water having a reduced sulphate, calcium and/or other soluble metals content.

According to an embodiment the apparatus comprises means for performing the steps of the method presented above.

According to an embodiment the apparatus comprises optionally a gypsum removal unit between the gypsum precipitation unit a) and the ettringite precipitation unit b). The gypsum removal unit is adapted for performing a solid-liquid separation for removing precipitated gypsum from the first sludge. The choice whether the apparatus comprises the additional gypsum removal unit may be done with the same principle as presented earlier in connection with the description of the method of the invention. If the apparatus comprises the gypsum removal unit, then after the gypsum removal unit the first sludge contains no or only minor quantities of gypsum (typically <100 mg/l). Typically the gypsum removal unit is a clarifier. Flocculants are typically used to aid the settling of the precipitates in the clarifier.

According to an embodiment the apparatus does not contain a gypsum removal unit between the gypsum precipitation unit a) and the ettringite precipitation unit b).

Typically the gypsum precipitation unit comprises stirred reactor tank and necessary inlets and outlets for providing and recovering process streams.

Typically the ettringite precipitation unit also comprises stirred reactor tank and necessary inlets and outlets for providing and recovering process streams.

The first and second separation units typically comprise any suitable equipment for separating solids from liquid, such as a settling device, a filter, a clarifier, a lamella clarifier, hydrocyclone or decanter. One or more of these equipments may be used in any combination if necessary. Typically the separation units comprise a clarifier, such as a conventional round clarifier with an optimized feed well design followed by a filtration unit to further dewater the produced clarifier underflow.

The neutralisation unit comprises typically a carbonation basin or a stirred tank reactor.

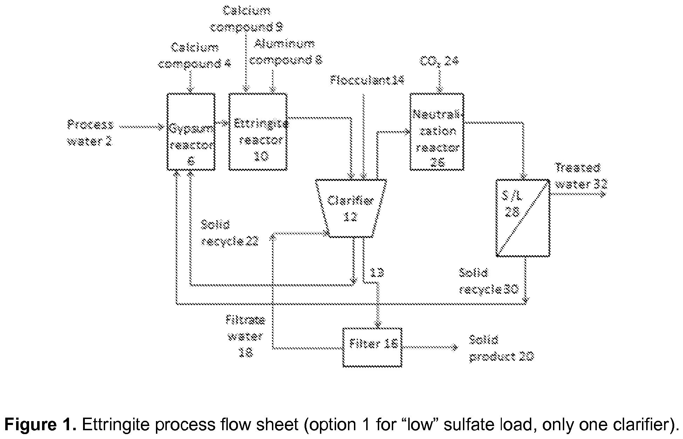

Referring to Figure 1, which is an example embodiment of the invention, wherein the sulphate load is typically "low", in the method water to be processed, i.e. process water 2, is fed to a gypsum precipitation step 6, which typically is a gypsum reactor. A first calcium compound 4, typically lime milk (calcium hydroxide), is also fed to the gypsum reactor thereby precipitating gypsum. A first sludge containing gypsum is formed and the first sludge is fed to an ettringite precipitation step 10, which is typically an ettringite reactor.

Aluminium compound 8, typically sodium aluminate and a second calcium compound 9, typically calcium hydroxide are fed to the ettringite precipitation step 10 thereby producing a second sludge containing ettringite and gypsum. The second sludge is subjected to a first solid-liquid separation step 12, which is typically performed by a clarifier. A second flocculant 14, is also fed to the clarifier. From the first solid-liquid separation step 12 the underflow 13 is fed to a filter 16 and/or back to the gypsum precipitation step as seeds in solid recycle 22. In the filtration step 16 the underflow is filtered thereby producing a solid product 20 containing gypsum, ettringite and soluble metals in precipitated form and filtrate water 18. The filtrate water 18 is conveyed back to the first solid-liquid separation step 12. The overflow from the first solid-liquid separation step 12 is conveyed to a neutralisation step 26, which is typically performed in a neutralisation reactor. Carbon dioxide 24 is fed to the neutralisation step 26 thereby neutralising the solution and precipitating calcium contained in the solution as calcium carbonate. Further removal of calcium may be achieved by optionally adding an alkaline to the neutralisation step, typically the alkaline is sodium hydroxide. The solution from the neutralisation step is conveyed to a second solid-liquid separation step 28 wherein the precipitated calcium carbonate is separated from the water thereby producing treated water 32. The solids obtained in the second solid-liquid separation step are conveyed to gypsum precipitation step 6 and used as solid recycle 30.

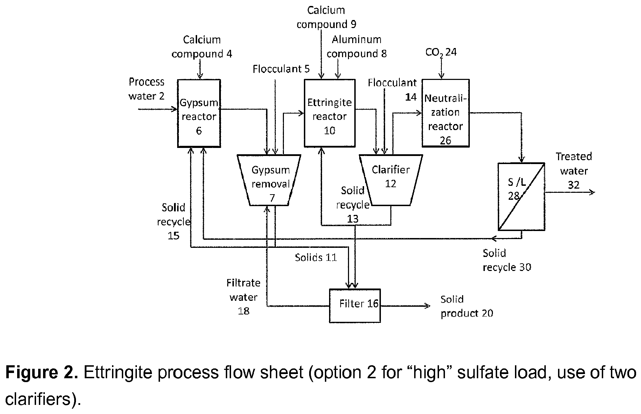

Figure 2 discloses an example embodiment of the method of the invention, wherein the sulphate load is typically "high", wherein the method is similar with the method described in connection with Figure 1 except that the first sludge produced in the gypsum precipitation step 6, which is typically performed in a gypsum reactor, is subjected to a gypsum removal step 7, which is typically performed by a clarifier. A first flocculant 5 is fed to the gypsum removal step. From the additional gypsum removal step 7 the underflow gypsum is fed to a filtration step 16 as solids 11 and filtration is performed as in connection with Fig. 1 or the solids from the gypsum removal step 7 are recycled back to gypsum precipitation step 6 as solid recycle 15. The overflow from the gypsum removal step 7, which is the first sludge, from which gypsum has been separated, is fed to the ettringite precipitation step 10. A second calcium compound 9, typically calcium hydroxide and aluminium compound 8, typically sodium aluminate are fed to the ettringite precipitation step 10 thereby producing a second sludge containing ettringite. The second sludge from the ettringite precipitation step 10 is fed to a first solid-liquid separation step 12, which is typically a clarifier, for separating the solids from the second sludge thereby producing solids and a first solution. A second flocculant 14 is also fed to the first solid-liquid separation step 12. The first solution is fed to the neutralisation step 26 and the rest of the method is continued as described in connection with reference to Figure 1. The solids from the first solid-liquid separation step 12 are conveyed to the filter 16 as solid recycle feed 13 and/or recycled to ettringite reactor 10. From the filter 16 filtrate water 18 and solid product 20 is obtained.

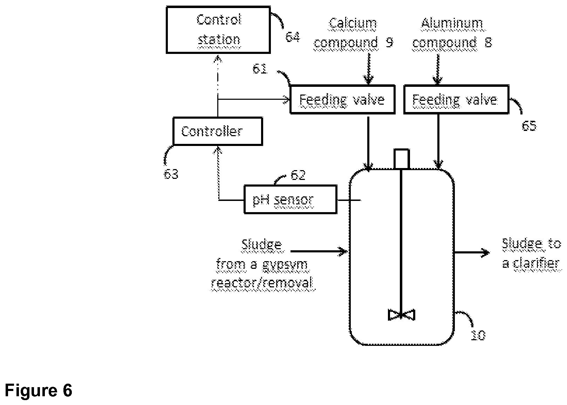

As described above, a careful control of calcium compound addition to in the ettringite precipitation step is important. Figure 6 is a block diagram of an exemplary ettringite precipitation system wherein such control may be implemented. In the illustrated example, the ettringite precipitation unit may comprise a stirred reactor tank, and necessary inlets and outlets for providing and recovering process streams, e.g. an incoming sludge stream from a gypsym reactor 6 or a gypsum removal unit 7 and an outgoing sludge stream to a clarifier 12. Examples of commercial reactors applicable for precipitation reactor 10 include OKTOP® reactors manufactured by Outotec. The reactor tank 10 may further comprise inlets for feeding a calcium compound or a material comprising calcium compound 9, and an aluminium compound 9 or a material comprising aluminium, such as those described above. The feed of the calcium compound 9 to the reactor tank 10 may be controlled by a feeding valve 61 that may be any type of process control valve. Similarly, the feed of an aluminium compound 9 to the reactor tank 10 may be controlled by a feeding valve 65 that may be any type of process control valve. Alternatively, pumps may be used instead of valves 61 and 65. Further, a pH measurement unit or sensor 62 may be provided to measure the pH of the solution in the tank. A pH measurement signal from the pH sensor 62 may be inputted to a controller unit 63 which is configured to control the feeding valve 61. The control signal from the controller 64 may be applied also to a control station 64 of the waste water processing system. The control station 64 may be, for example, a process control system or a control room computer. In an exemplary embodiment, the controller 63 may be part of the control station 64, in which case the pH measurement may be supplied to the control station 64 which is configured to control the feeding valve 61.

The inventors have observed that if the pH of the solution in the reactor tank is 12 or more, a conventional pH sensor does not operate as a reliable basis for chemical dosing any more. Consequently, a sole pH based dosing of a calcium compound or a material comprising calcium compound into the reactor tank will not guarantee that a sufficient amount of calcium is available for the precipitation of ettringite. All calcium may be consumed too early in the solution, the precipitation may stop, and a designed amount of sulphate, calcium and/or other soluble metals cannot be precipitated with the added aluminium. In other words, the pH does not change in the same rate as calcium is consumed in the precipitation.

To avoid this problem, according to embodiments of the inventions, a calcium compound or a material comprising calcium compound may be fed or dosed into the reactor tank in two different ways in two steps. Firstly, stoichiometric amounts of a calcium compound or a material comprising calcium compound may be fed into the reactor tank to guarantee the precipitation of the ettringite. The stoichiometric amount of a calcium compound or a material comprising calcium compound may be determined (e.g. calculated) based on the sulphate content in the waste water. Secondly, a subsequent pH based dosing of a calcium compound or a material comprising calcium compound into the reactor tank may be utilized to maintain the pH of the solution in the tank within a range wherein precipitation can occur. In other words, the dosing of calcium is performed in steps such that firstly calcium content is controlled to a desired level, and then a pH level is controlled to a desired level, such that an aluminium compound or material comprising an aluminium compound is added in optimal conditions for ettringite precipitation.

A two-step feeding of a calcium compound or a material comprising calcium compound into the reactor tank may provide various advantages over a feeding of calcium based on a pH measurement only. The precipitation of ettringite is not dependent of the operation of the pH measurement, and steady conditions for the precipitation can be achieved, such that the quality of the processed water is uniform and does not vary based on the pH control/measurement accuracy. Also the consumption of calcium compound and aluminium compound is substantially optimal in relation to the amount of sulphate, calcium and/or other soluble metals removed from the waste water.

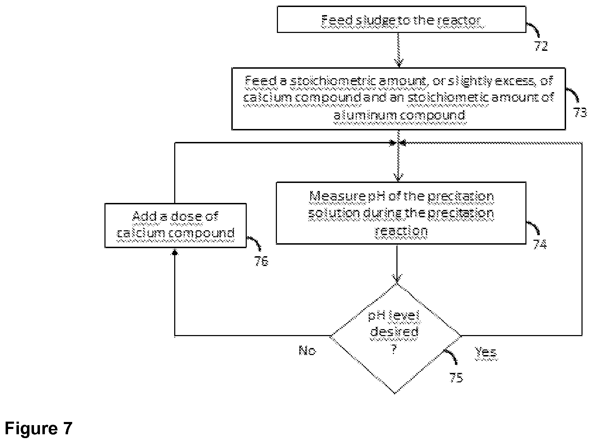

An exemplary flow diagram of a control of ettringite precipitation process is illustrated in Figure 7. The control process may be an automatic or semi-automatic control. In a semiautomatic control some of the control phases, particularly the starting and ending of the precipitation process may be done manually e.g. from the control station 64 by an operator. First a sludge stream is fed to the reactor tank 10 for an ettringite precipitation (step 72). Further, a stoichiometric, or slightly excess, amounts of aluminium compound or material comprising an aluminium compound and stoichiometric amount of calcium compound or a material comprising calcium compound, typically at pH from 10.5 to 12.5, are fed into the reactor tank 10 (step 73). The calcium compound 9 in the ettringite precipitation process may be lime milk (calcium hydroxide). The solution within the reactor tank 10 is stirred and the precipitation process proceeds. During the precipitation process, the pH of the solution in the reactor tank 10 may be measured by the pH sensor 62, and the pH measurement may be inputted to the controller 63. The controller 63 may compare the measured pH level with a desired pH level (step 75). The desired pH level may be a threshold level that shall be exceeded or a pH range within which the pH shall be. The precipitation pH is primarily adjusted and controlled on the basis of the calcium balance in the solution ensuring that the calcium compound feed is sufficient compared to the stoichiometric need according to the ettringite precipitation reaction (e.g. 2 moles of calcium per 1 mole of sulphate). Typically the calcium concentration needed in the ettringite sludge in the reactor tank 10 may be at least 200 mg/l. secondarily, at the same time it may be ensured that the calcium compound feed is sufficient to allow the pH of the solution to be adjusted to the desired range, preferably to a range from about 10.5 to 12.5. If the measured pH level is not at the desired pH level, the controller 63 may control the feeding valve 62 to feed an additional dose of the calcium compound 9 into the reactor tank 10 (step 76) and the pH measurement (step 74) may be repeated. If the measured pH level is at the desired pH level, i.e. the process has received a steady state, the control procedure may directly return to the pH measurement 75 without feeding any additional dose of the calcium compound 9 into the reactor tank 10. This type of pH control and measurement loop may continue maintaining the process in the steady state.

The additive dose of the calcium compound fed in step may be any small amount. The size of the additive dose may depend on the difference between the measured pH and the desired pH, and/or it may depend on a time constant of the pH control loop.

The control techniques described herein may be implemented by various means. For example, these techniques may be implemented in hardware (one or more devices), firmware (one or more devices), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) and executed by one or more processors. The data storage medium or the memory unit may be implemented within the processor or external to the processor, in which case it can be communicatively coupled to the processor via various means as is known in the art. Additionally, components of systems described herein may be rearranged and/or complimented by additional components in order to facilitate achieving the various aspects, goals, advantages, etc., described with regard thereto, and are not limited to the precise configurations set forth in a given figure, as will be appreciated by one skilled in the art.

### EXAMPLES

### Example 1

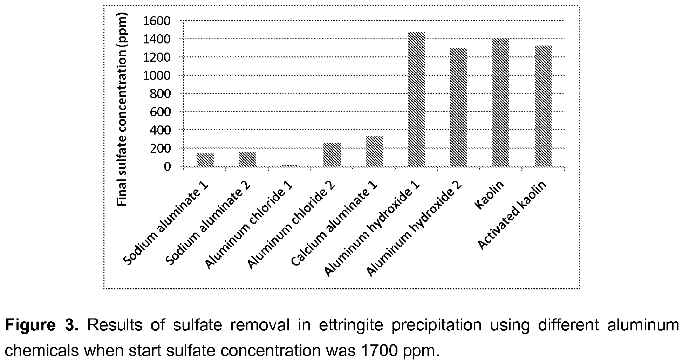

Several aluminium chemicals were tested for ettringite precipitation to assess the efficiency of these chemicals. All the compounds were tested in similar conditions and the sodium aluminate was also tested for real mine water. Figure 3 shows the tested aluminium chemicals and the sulphate level achieved with different chemicals after 60 minutes precipitation. As the dosing philosophy for different aluminium chemicals is the same, the Figure 3 also shows the relative required aluminium dosage to achieve the sulphate concentration. For all the tests, the test conditions were similar and the added aluminium dose corresponded to the theoretical aluminium requirement to precipitate all sulphate as ettringite. Thus the added molar amount of aluminium was the same for all tests but the amount of added chemicals varied according to the aluminium content of the chemical. Part of the obtained differences in dosing is explained by the fact that some of the chemicals were sparingly soluble in the test conditions, which limited the availability of aluminium for ettringite precipitation.

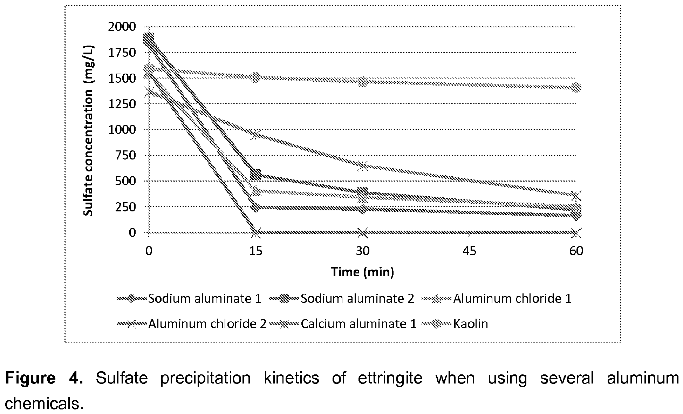

Figure 4 shows examples of sulphate removal kinetics in ettringite precipitation tests when using several aluminium chemicals. All the compounds were tested in similar conditions and the sodium aluminate was also tested for real mine water. For all the tests, the test conditions were similar and the added aluminium dose corresponded to the theoretical aluminium requirement to precipitate all sulphate as ettringite. Thus the added molar amount of aluminium was the same for all tests but the amount of added chemicals varied according to the aluminium content of the chemical. For ettringite precipitation 15 minutes was a sufficient retention time, but longer precipitation improved sulphate removal and formation of precipitate.

### Example 2

As described in the description of the invention, the selection of processing route depends on the designed gypsum production in the gypsum precipitation step (a) compared to the designed stoichiometric amount of ettringite production in the subsequent ettringite precipitation step (b). If the amount of gypsum solids precipitated in the gypsum precipitation step is >10 weight-% of the designed stoichiometric amount of ettringite solids precipitated in the ettringite precipitation step, an optional gypsum solids separation step may be beneficial. The separation is then beneficial in order to avoid increasing the aluminium compound consumption caused by re-dissolution of gypsum caused by the decreasing sulphate level. If the amount of gypsum solids precipitated in the gypsum precipitation step is less than or equal to 10 weight-% of the designed stoichiometric amount of ettringite solids precipitated in the ettringite precipitation step, then the optional gypsum solids separation step is typically not used.

Table 1 shows an example of the process selection basis with different levels of input sulphate concentration resulting in different amounts of gypsum produced in the gypsum precipitation step. The gypsum and ettringite solid productions are estimated based on equations 1 and 2.

**Table 1. Example of process route selection depending on theoretical gypsum production compared to ettringite production**

| | | Case 1 | Case 2 |
|---|---|---|---|
| Process inlet flow | m³/h | 100 | 100 |
| SO4 concentration in inlet | mg/l | 1700 | 4000 |
| SO4 concentration after gypsum precipitation unit | mg/l | 1500 | 1500 |
| SO4 concentration after ettringite precipitation unit | mg/l | 300 | 300 |
| Theoretical gypsum (CaSO₄*2H₂O) production in step 1 | kg/h | 35.8 | 448.1 |
| Theoretical ettringite [Ca₆Al₂(SO₄)₃(OH)₁₂ *26 H₂O] production in step 2 | kg/h | 522.6 | 522.6 |
| Gypsum/ettringite solids ratio | wt-% | 6.4 | 46.2 |
| Process route | | Option 1, gypsum separation not used Gypsum/Ettringite ratio <10% | Option 2, gypsum separation used Gypsum/Ettringite ratio >10% |

### Example 3

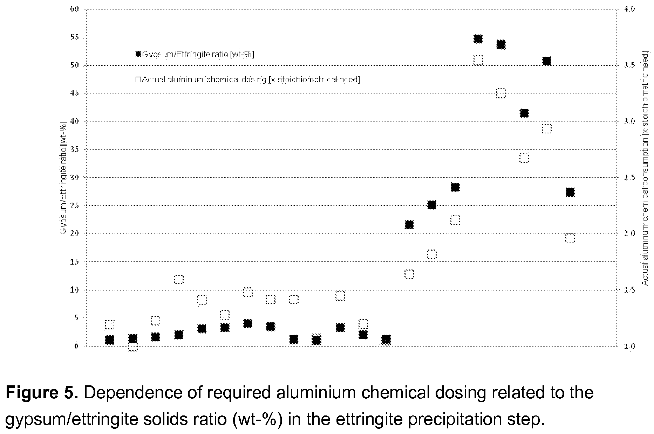

Figure 5 shows test work results from a continuous bench-scale pilot, where gypsum solids were not separated before the ettringite precipitation step. Increasing gypsum/ettringite solids ratio (wt-%) increases the relative requirement (stoichiometric overdosing) for aluminium chemical.

It will be obvious to a person skilled in the art that, as the technology advances, the inventive concept can be implemented in various ways. The invention and its embodiments are not limited to the examples described above but may vary within the scope of the claims.

## Claims

1. A method for removing sulphate, calcium and other soluble metals from sulphate-containing waste water, which method comprises the following steps
a) a gypsum precipitation step, wherein the waste water is contacted with a first calcium compound or a first material comprising calcium compound to produce a first sludge containing gypsum,
b) an ettringite precipitation step, wherein the first sludge is contacted with a second calcium compound or a second material comprising a second calcium compound and an aluminium compound or a material containing an aluminium compound, to produce a second sludge containing ettringite and gypsum,
wherein a gypsum removal step is performed between steps a) and b) if the amount of gypsum solids precipitated in the gypsum precipitation step a) is more than 10 weight-% of the designed stoichiometric amount of ettringite solids precipitated in the ettringite precipitation step b), or
wherein no gypsum removal step is performed if the amount of gypsum solids precipitated in the gypsum precipitation step a) is less than or equal to 10 weight-% of the designed stoichiometric amount of ettringite solids precipitated in the ettringite precipitation step b),
c) a first separation step, wherein a solid-liquid separation is performed for the second sludge containing ettringite and gypsum to separate solids from the liquid thereby producing a first solution,
d) a neutralisation step, wherein the first solution is contacted with a carbonating agent to neutralise the first solution and precipitate calcium contained in the first solution as calcium carbonate, and
e) a second separation step wherein a solid-liquid separation is performed to separate precipitated calcium carbonate from the first solution in order to obtain water having a reduced sulphate, calcium and/or other soluble metals content.

2. The method according to claim 1, wherein the gypsum precipitation step a) is followed by a gypsum removal step, wherein a solid-liquid separation is performed for removing precipitated gypsum from the first sludge.

3. The method according to any one of the preceding claims, wherein the waste water is process water, effluent or sulphate-containing water, such as mine water, recycle water from concentrator or discharge water from concentrator.

4. The method according to any one of the preceding claims, wherein the first calcium compound and the second calcium compound are selected independently from the group consisting of calcium hydroxide, calcium oxide, calcium carbonate and a mixture thereof.

5. The method according to any one of the preceding claims, wherein the material containing aluminium compound is selected from the group consisting of calcium aluminate compounds, sodium aluminate solutions, sodium aluminate solids, calcium aluminate cements, aluminium chlorides, activated aluminate-containing minerals, such as kaolin or a mixture thereof.

6. The method according to any one of the preceding claims, wherein the aluminium compound is selected from the group consisting of calcium aluminate, sodium aluminate, aluminium chloride, calcium aluminate cement, aluminium hydroxide and kaolin (Al₂Si₂O₅(OH)₄), or a mixture thereof.

7. The method according to any one of the preceding claims, wherein the retention time in the ettringite precipitation step is from 10 to 60 minutes, typically from 15 to 30 minutes.

8. The method according to any one of the preceding claims, wherein in the ettringite precipitation step the molar ratio of Al³⁺/SO₄²⁻ is approximately from 2:3 to 1:1.

9. The method according to any one of the preceding claims, wherein the solid-liquid separation is performed by settling, filtering and/or clarification.

10. The method according to any one of the preceding claims, wherein the solids separated in the first separation step comprise ettringite and optionally gypsum, calcium carbonate, metal hydroxides and other inert components present in the feed materials to the method.

11. The method according to any one of the preceding claims, wherein part of or all of the solids separated in the first separation step are recycled back to the gypsum precipitation step and/or the ettringite precipitation step.

12. The method according to any one of the preceding claims, wherein in the neutralisation step the carbonating agent is selected from the group consisting of CO₂, sodium bicarbonate and sodium carbonate.

13. The method according to any one of the preceding claims, wherein in the neutralisation step the first solution is contacted with an alkaline for increasing the precipitation of calcium.

14. The method according to claim 13, wherein the alkaline is sodium hydroxide.

15. The method according to any one of the preceding claims, wherein the waste water comprises thiosalts and the waste water is oxidised prior to feeding to the gypsum precipitation step.

16. The method according to any one of the preceding claims, wherein the first calcium compound is calcium hydroxide.

17. The method according to any one of the preceding claims, wherein the second calcium compound is calcium hydroxide.

18. The method according to any one of the preceding claims, wherein the aluminium compound is sodium aluminate.

19. The method according to any one of the preceding claims 1 to 18, comprising controlling an ettringite precipitation process for removing sulphate, calcium and other soluble metals from sulphate-containing waste water, comprising
feeding a sludge stream into a reactor tank for an ettringite precipitation;
feeding stoichiometric amount, or slightly excess, of aluminium compound or material comprising an aluminium compound, and an stoichiometric amount of calcium compound or a material comprising calcium compound into the reactor tank; measuring the pH of the solution in the reactor tank during the ettringite precipitation process;
feeding one or more additive doses of the calcium compound or the material comprising calcium compound into the reactor tank if the measured pH is not at a predetermined pH level, in order to adjust the pH of the solution towards the predetermined pH level; and
wherein the predetermined pH level is in a range from about 10.5 to about 12.5 .

20. A method according to claim 19, wherein a pH of the calcium compound or the material comprising calcium compound preferably range from about 10.5 to about 12.5.

21. A computer program comprising program code for performing any of methods according to claims 19-20, when the program is run on one or more computer or processor.

## Patentansprüche

1. Verfahren zum Entfernen von Sulfat, Calcium und anderen löslichen Metallen aus sulfathaltigem Abwasser, wobei das Verfahren die folgenden Schritte umfasst:
a) einen Gipsausfällschritt, wobei das Abwasser in Kontakt mit einer ersten Calciumverbindung oder einem ersten Material gebracht wird, das eine Calciumverbindung enthält, um einen ersten Schlamm zu erzeugen, der Gips enthält,
b) einen Ettringit-Ausfällschritt, wobei der erste Schlamm in Kontakt mit einer zweiten Calciumverbindung oder einem zweiten Material, das eine zweite Calciumverbindung umfasst, und einer Aluminiumverbindung oder einem Material, das eine Aluminiumverbindung enthält, gebracht wird, um einen zweiten Schlamm zu erzeugen, der Ettringit und Gips enthält, wobei ein Gips-Entfernungsschritt zwischen Schritt a) und b) ausgeführt wird, wenn die Menge an Gipsfeststoffen, die im Gipsausfällschritt a) ausgefällt wurde, mehr als 10 Gew-% der bestimmten stöchiometrischen Menge von Ettringit-Feststoffen beträgt, die im Ettringit-Ausfällschritt b) ausgefällt wurden; oder
wobei kein Gips-Entfernungsschritt ausgeführt wird, wenn die Menge an Gips-Feststoffen, die im Gips-Ausfällschritt a) ausgefällt wurde, kleiner oder gleich 10 Gew-% der bestimmten stöchiometrischen Menge von Ettringit-Feststoffen beträgt, die im Ettringit-Ausfällschritt b) ausgefällt wurden,
c) einen ersten Trennschritt, wobei eine Feststoff-Flüssigkeits-Trennung für den zweiten Schlamm ausgeführt wird, der Ettringit und Gips enthält, um Feststoffe aus der Flüssigkeit zu entfernen, wodurch eine erste Lösung erzeugt wird,
d) einen Neutralisierungsschritt, wobei die erste Lösung in Kontakt mit einem Carbonisierungsmittel gebracht wird, um die erste Lösung zu neutralisieren und Calcium auszufällen, das in der ersten Lösung als Calciumcarbonat enthalten ist, und
e) einen zweiten Trennschritt, wobei eine Feststoff-Flüssigkeits-Trennung ausgeführt wird, um ausgefälltes Calciumcarbonat von der ersten Lösung zu trennen, um Wasser zu gewinnen, das einen reduzierten Sulfat-, Calcium- und/oder Gehalt an anderen löslichen Metallen hat.

2. Verfahren nach Anspruch 1, wobei dem Gips-Ausfällschritt a) ein Gips-Entfernungsschritt folgt, wobei eine Feststoff-Flüssigkeits-Trennung ausgeführt wird zum Entfernen von ausgefälltem Gips aus dem ersten Schlamm.

3. Verfahren nach einem der vorherigen Ansprüche, wobei das Abwasser Prozesswasser, Abfluss- oder sulfathaltiges Wasser ist, wie zum Beispiel Grubenwasser, Recyclingwasser vom Konzentrator oder Auslasswasser vom Konzentrator.

4. Verfahren nach einem der vorherigen Ansprüche, wobei die erste Calciumverbindung und die zweite Calciumverbindung unabhängig von der Gruppe ausgewählt werden, die aus Calciumhydroxid, Calciumoxid, Calciumcarbonat und eine Mischung derselben besteht.

5. Verfahren nach einem der vorherigen Ansprüche, wobei das Material, das eine Aluminiumverbindung enthält, ausgewählt wird aus der Gruppe bestehend aus Calciumaluminatverbindungen, Natriumaluminatlösungen, Natriumaluminatfeststoffen, Calciumaluminatzementen, Aluminiumchloriden, aktivierten aluminathaltigen Mineralien, wie zum Beispiel Kaolin oder eine Mischung derselben.

6. Verfahren nach einem der vorherigen Ansprüche, wobei die Aluminiumverbindung ausgewählt wird aus der Gruppe, die aus Calciumaluminat, Natriumaluminat, Aluminiumchlorid, Calciumaluminatzement, Aluminiumhydroxid und Kaolin (Al₂Si₂O₅(OH)₄), oder einer Mischung derselben besteht.

7. Verfahren nach einem der vorherigen Ansprüche, wobei die Verweildauer im Ettringit-Ausfällschritt 10-60 Minuten beträgt, typischerweise 15-30 Minuten.

8. Verfahren nach einem der vorherigen Ansprüche, wobei beim Ettringit-Ausfällschritt das Molverhältnis von Al³⁺/SO₄²⁻ annähernd 2:3 bis 1:1 beträgt.

9. Verfahren nach einem der vorherigen Ansprüche, wobei die Feststoff-Flüssigkeits-Trennung durch Setzen, Filtern und/oder Klärung erfolgt.

10. Verfahren nach einem der vorherigen Ansprüche, wobei die Feststoffe, die im ersten Trennschritt getrennt werden, Ettringit und optional Gips, Calciumcarbonat, Metallhydroxide und andere inerte Komponenten umfassen, die in den Zufuhrmaterialien für das Verfahren vorhanden sind.

11. Verfahren nach einem der vorherigen Ansprüche, wobei ein Teil der oder alle Feststoffe, die im ersten Trennschritt getrennt wurden, recycelt werden und zurück zum Gips-Ausfällschritt und/oder dem Ettringit-Ausfällschritt zurückgeführt werden.

12. Verfahren nach einem der vorherigen Ansprüche, wobei beim Neutralisierungsschritt das Carbonisierungsmittel aus der Gruppe ausgewählt wird, die aus CO₂, Natriumbicarbonat und Natriumcarbonat besteht.

13. Verfahren nach einem der vorherigen Ansprüche, wobei beim Neutralisierungsschritt die erste Lösung in Kontakt mit einem alkalischen Material zum Verstärken der Ausfällung von Calcium gebracht wird.

14. Verfahren nach Anspruch 13, wobei das alkalische Material Natriumhydroxid ist.

15. Verfahren nach einem der vorherigen Ansprüche, wobei das Abwasser Thiosalze enthält, und das Abwasser wird vor der Zufuhr für den Gips-Ausfällschritt oxidiert.

16. Verfahren nach einem der vorherigen Ansprüche, wobei die erste Calciumverbindung Calciumhydroxid ist.

17. Verfahren nach einem der vorherigen Ansprüche, wobei die zweite Calciumverbindung Calciumhydroxid ist.

18. Verfahren nach einem der vorherigen Ansprüche, wobei die Aluminiumverbindung Natriumaluminat ist.

19. Verfahren nach einem der vorherigen Ansprüche 1 bis 18, das das Steuern eines Ettringit-Ausfällprozesses zum Entfernen von Sulfat, Calcium und anderen löslichen Metallen aus dem sulfathaltigen Abwasser umfasst, umfassend
Zuführen eines Schlammstroms in den Reaktortank für eine Ettringit-Ausfällung;
Zuführen einer stöchiometrischen Menge, oder etwas mehr, von Aluminiumverbindung oder Material, das eine Aluminiumverbindung enthält, und einer stöchiometrischen Menge von Calciumverbindung oder eines Materials, das Calciumverbindung enthält, zum Reaktortank;
Messen des pH-Wertes der Lösung im Reaktortank während des Ettringit-Ausfällprozesses;
Zuführen von einer oder mehrerer Additiv-Dosen der Calciumverbindung oder des Materials, das Calciumverbindung enthält, zum Reaktanten, wenn der gemessene pH-Wert nicht auf einem vorgegebenen pH-Pegel ist, um den pH-Wert der Lösung auf den vorgegebenen pH-Pegel einzustellen; und
wobei der vorgegebene pH-Pegel in einem Bereich von etwa 10,5 bis etwa 12,5 liegt.

20. Verfahren nach Anspruch 19, wobei ein pH-Wert der Calciumverbindung oder des Materials, das Calciumverbindung enthält, vorzugsweise zwischen etwa 10,5 und etwa 12,5 liegt.

21. Computerprogramm, das Programmcode zum Ausführen von einem der Verfahren nach Anspruch 19-20 umfasst, wenn das Programm auf einem oder mehreren Computern oder Prozessoren ausgeführt wird.

## Revendications

1. Procédé pour éliminer le sulfate, le calcium et d'autres métaux solubles dans une eau résiduaire contenant du sulfate, lequel procédé comprend les étapes suivantes :
a) une étape de précipitation de gypse, dans laquelle l'eau résiduaire est mise en contact avec un premier composé du calcium ou d'un premier matériau comprenant un composé du calcium pour produire une première boue contenant du gypse,
b) une étape de précipitation d'ettringite, dans laquelle la première boue est mise en contact avec un deuxième composé du calcium ou d'un deuxième matériau comprenant un deuxième composé du calcium et un composé de l'aluminium ou un matériau contenant un composé de l'aluminium, pour produire une deuxième boue contenant de l'ettringite et du gypse,
dans lequel une étape d'élimination du gypse est effectuée entre les étapes a) et b) si le gypse solide précipité dans l'étape de précipitation de gypse a) dépasse 10 % en poids de la quantité stoechiométrique désignée d'ettringite solide précipitée dans l'étape de précipitation d'ettringite b), ou
dans lequel aucune étape d'élimination du gypse n'est effectuée si la quantité de gypse solide précipité dans l'étape de précipitation de gypse a) est inférieure ou égale à 10 % en poids de la quantité stoechiométrique désignée d'ettringite solide précipitée dans l'étape de précipitation d'ettringite b),
c) une première étape de séparation, dans laquelle une séparation solide-liquide est effectuée pour la deuxième boue contenant de l'ettringite et du gypse pour séparer les solides du liquide en produisant ainsi une première solution,
d) une étape de neutralisation, dans laquelle la première solution est mise en contact avec un agent de carbonatation pour que la première solution soit neutralisée et pour que le calcium contenu dans la première solution soit précipité sous forme de carbonate de calcium, et
e) une deuxième étape de séparation dans laquelle une séparation solide-liquide est effectuée pour séparer le carbonate de calcium précipité de la première solution afin que soit obtenue de l'eau ayant une teneur réduite en sulfate, calcium et/ou autres métaux solubles.

2. Procédé selon la revendication 1, dans lequel l'étape de précipitation de gypse a) est suivie d'une étape d'élimination du gypse dans laquelle une séparation solide-liquide est effectuée pour éliminer le gypse précipité de la première boue.

3. Procédé selon l'une quelconque des revendications précédentes, dans lequel l'eau résiduaire est de l'eau de traitement, de l'eau contenant un sulfate ou un effluent, telle que de l'eau de mine, de l'eau de recyclage provenant d'un concentrateur ou de l'eau d'évacuation provenant d'un concentrateur.

4. Procédé selon l'une quelconque des revendications précédentes, dans lequel le premier composé du calcium et le deuxième composé du calcium sont choisis indépendamment dans le groupe constitué par l'hydroxyde de calcium, l'oxyde de calcium, le carbonate de calcium et un mélange de ceux-ci.

5. Procédé selon l'une quelconque des revendications précédentes, dans lequel le matériau contenant un composé de l'aluminium est choisi dans le groupe constitué par les composés d'aluminate de calcium, les solutions d'aluminate de calcium, les solides d'aluminate de calcium, les ciments d'aluminate de calcium, les chlorures d'aluminium, les minéraux contenant de l'aluminate activé, tels que le kaolin, ou un mélange de ceux-ci.

6. Procédé selon l'une quelconque des revendications précédentes, dans lequel le composé de l'aluminium est choisi dans le groupe constitué par l'aluminate de calcium, l'aluminate de sodium, le chlorure d'aluminium, le ciment d'aluminate de calcium, l'hydroxyde d'aluminium et le kaolin (Al₂Si₂O₅(OH)₄), ou un mélange de ceux-ci.

7. Procédé selon l'une quelconque des revendications précédentes, dans lequel le temps de séjour dans l'étape de précipitation d'ettringite est de 10 à 60 minutes, typiquement de 15 à 30 minutes.

8. Procédé selon l'une quelconque des revendications précédentes, dans lequel, dans l'étape de précipitation d'ettringite, le rapport molaire Al³⁺/SO₄²⁻ est d'environ 2/3 à 1/1.

9. Procédé selon l'une quelconque des revendications précédentes, dans lequel la séparation solide-liquide est effectuée par sédimentation, filtration et/ou clarification.

10. Procédé selon l'une quelconque des revendications précédentes, dans lequel les solides séparés dans la première étape de précipitation comprennent de l'ettringite et éventuellement du gypse, du carbonate de calcium, des hydroxydes métalliques et d'autres composants inertes présents dans les matériaux de charge pour le procédé.

11. Procédé selon l'une quelconque des revendications précédentes, dans lequel tout ou partie des solides séparés dans la première étape de séparation sont recyclés vers l'étape de précipitation de gypse et/ou l'étape de précipitation d'ettringite.

12. Procédé selon l'une quelconque des revendications précédentes, dans lequel, dans l'étape de neutralisation, l'agent de carbonatation est choisi dans le groupe constitué par le CO₂, le bicarbonate de sodium et le carbonate de sodium.

13. Procédé selon l'une quelconque des revendications précédentes, dans lequel, dans l'étape de neutralisation, la première solution est mise en contact avec un alcali pour augmenter la précipitation du calcium.

14. Procédé selon la revendication 13, dans lequel l'alcali est l'hydroxyde de sodium.

15. Procédé selon l'une quelconque des revendications précédentes, dans lequel l'eau résiduaire comprend des thio-sels et l'eau résiduaire est oxydée avant l'introduction dans l'étape de précipitation de gypse.

16. Procédé selon l'une quelconque des revendications précédentes, dans lequel le premier composé du calcium est l'hydroxyde de calcium.

17. Procédé selon l'une quelconque des revendications précédentes, dans lequel le deuxième composé du calcium est l'hydroxyde de calcium.

18. Procédé selon l'une quelconque des revendications précédentes, dans lequel le composé de l'aluminium est l'aluminate de sodium.

19. Procédé selon l'une quelconque des revendications 1 à 18, comprenant le contrôle d'un processus de précipitation d'ettringite pour éliminer le sulfate, le calcium et d'autres métaux solubles dans l'eau résiduaire contenant du sulfate, comprenant
l'introduction d'un courant de boue dans une cuve de réacteur pour une précipitation d'ettringite ;
l'introduction d'une quantité stoechiométrique, ou d'un léger excès, d'un composé de l'aluminium ou d'un matériau comprenant un composé de l'aluminium, et d'une quantité stoechiométrique d'un composé du calcium ou d'un matériau comprenant un composé du calcium dans la cuve de réacteur ;
la mesure du pH de la solution dans la cuve de réacteur durant le processus de précipitation d'ettringite ;
l'introduction d'une ou plusieurs doses supplémentaires du composé du calcium ou du matériau comprenant un composé du calcium dans la cuve de réacteur si le pH mesuré n'est pas à une valeur de pH prédéterminée, afin d'ajuster le pH de la solution à la valeur de pH prédéterminée ; et
dans lequel la valeur de pH prédéterminée est située dans la plage allant d'environ 10,5 à environ 12,5.

20. Procédé selon la revendication 19, dans lequel le pH du composé du calcium ou du matériau comprenant un composé du calcium est de préférence situé dans la plage allant d'environ 10,5 à environ 12,5.

21. Programme informatique comprenant un code de programmation pour réaliser l'un quelconque des procédés selon les revendications 19 à 20, quand le programme est exécuté sur un ou plusieurs ordinateurs ou processeurs.
